# EUROPÄISCHE PATENTSCHRIFT

(11) **EP 3 914 887 B1**
(45) Veröffentlichungstag und Bekanntmachung des Hinweises auf die Patenterteilung: **28.02.2024**
(21) Anmeldenummer: 20700372.4
(22) Anmeldetag: 10.01.2020
(51) Int. Cl.: G01M 3/18

(54) **PRÜFVORRICHTUNG ZUR DICHTHEITSPRÜFUNG**
TESTING DEVICE FOR TESTING FLUID TIGHTNESS
DISPOSITIF DE CONTRÔLE POUR CONTRÔLE D'ÉTANCHÉITÉ

(30) Priorität: 22.01.2019 AT 500432019
(43) Veröffentlichungstag der Anmeldung: 01.12.2021
(73) Patentinhaber: E. Hawle Armaturenwerke GmbH, 4840 Vöcklabruck (AT)
(72) Erfinder: PLAINER, Franz, 4870 Vöcklamarkt (AT)
(74) Vertreter: Puchberger & Partner Patentanwälte
(86) Internationale Anmeldenummer: PCT/EP2020/050507
(87) Internationale Veröffentlichungsnummer: WO 2020/151961

(56) Entgegenhaltungen:
- US-A1- 2006 202 051

## Beschreibung

Die Erfindung betrifft eine Prüfvorrichtung zur Dichtheitsprüfung von Fluidabsperrvorrichtungen gemäß dem Oberbegriff des unabhängigen Patentanspruchs.

Rohrleitungen werden beispielsweise bei der Wasserversorgung oder der Abwasserentsorgung eingesetzt. Um den Fluss eines Mediums bzw. eines Fluids, welches durch eine Rohrleitung fließt absperren zu können, sind im Stand der Technik Fluidabsperrvorrichtungen bekannt. Derartige Fluidabsperrvorrichtungen weisen üblicherweise zwei Anschlussvorrichtungen auf, die beidseitig eines Absperrelements angeordnet sind. Die Anschlussvorrichtungen sind jeweils mit Rohrleitungen verbunden oder verbindbar, sodass durch Betätigung des Absperrelements der Fluss des Fluids zwischen den beiden Rohrleitungen abgesperrt oder freigegeben werden kann.

Ein entscheidender Qualitätsparameter derartiger Fluidabsperrvorrichtungen ist deren Dichtheit. Üblicherweise wird die Dichtheit von Fluidabsperrvorrichtungen gemäß den Normen EN 12266 bzw. EN 1074 bestimmt. Die genannten Normen sehen ein auch als Keilabschlussprüfung bezeichnetes Prüfverfahren vor. Bei dem Prüfverfahren wird eine mit Druck beaufschlagte Prüfflüssigkeit gegen das geschlossene Absperrelement einer Fluidabsperrvorrichtung gedrückt. Die Dichtheit der Fluidabsperrvorrichtung wird nun entweder durch Messung des Wasserflusses an der Eingangsseite oder durch optische Kontrolle auf der anderen Seite des Absperrelements - also insbesondere die Beobachtung, ob Flüssigkeitstropfen austreten - überprüft. Statt der optischen Prüfung über den Austritt von Flüssigkeitstropfen kann auch eine Durchflussprüfung auf der Eingangs- oder der Ausgangsseite erfolgen

Nachteilig am beschriebenen und im Stand der Technik bekannten Prüfverfahren ist die lange Prüfdauer, die notwendig ist, um die Dichtheit eindeutig bestätigen zu können. Beispielsweise kann sich das Absperrelement, welches mit dem Prüfdruck beaufschlagt wird, deformieren, was dazu führt, dass Prüfflüssigkeit von der drucklosen Seite des Absperrelements verdrängt wird. Eine Druckbeaufschlagung des Absperrelements kann ferner eine Stauchung der Anschlussvorrichtung bewirken, was ebenfalls zu einer Volumsänderung führen kann. Auch beim Schließen des Absperrelements wird gegebenenfalls die Absperrvorrichtung deformiert. Um falsche Aussagen über die Dichtheit der zu prüfenden Fluidabsperrvorrichtung zu vermeiden, muss sichergestellt sein, dass vor der Durchführung der eigentlichen Messung die komplette Deformation des Absperrelements bereits stattgefunden hat. Auch Temperaturunterschiede können zu einer Volumsveränderung der Prüfflüssigkeit oder der Gehäuseteile der Fluidabsperrvorrichtung führen, was zur Detektion einer scheinbaren Undichtheit oder Verschleierung einer tatsächlichen Undichtheit führen kann.

Um derartige Falschbefunde zu vermeiden, ist es daher in Verfahren gemäß dem Stand der Technik notwendig, lange Equilibrierungszeiten einzuhalten, was wirtschaftlich nachteilig ist.

Aus der US 2006/202051 A1 ist im Stand der Technik eine Prüfvorrichtung für ein Ventil bekannt, die zur Dichtheitsprüfung eine Widerstandsmessung durchführt. Mit dieser Vorrichtung können Fehlfunktionen bei der Messung jedoch nicht überwacht werden, was wiederum zu Falschbefunden führen kann.

Es ist daher die Aufgabe der vorliegenden Erfindung, eine Prüfvorrichtung und ein Prüfverfahren zu schaffen, die eine zeiteffiziente Messung der Undichtheiten von Absperrelementen erlauben und die insbesondere das Risiko für Falschbefunde minimieren können.

Die Aufgabe der Erfindung wird durch den kennzeichnenden Teil der unabhängigen Patentansprüche gelöst. Der Gegenstand, für den Schutz begehrt wird, wird in den Patentansprüchen angegeben.

Der Erfinder hat festgestellt, dass elektrischer Strom in zielführender Weise für die Detektion von Undichtheiten von Fluidabsperrvorrichtungen verwendet werden kann.

Fließt elektrischer Strom durch ein leitfähiges Fluid, das an einer Stelle einer Verjüngung ausgesetzt ist, so ist der elektrische Widerstand umso höher, je kleiner der Querschnitt der Verjüngung ist. Überraschenderweise lässt sich dieses Konzept für die Dichtheitsprüfung von Fluidabsperrvorrichtungen umsetzen.

Die Erfindung betrifft also eine Prüfvorrichtung zur Dichtheitsprüfung einer Fluidabsperrvorrichtung, die ein bewegbares und mit Druck beaufschlagbares, elektrisch isolierendes Absperrelement sowie zwei beidseitig des Absperrelements angeordnete Anschlussvorrichtungen umfasst, wobei die Prüfvorrichtung eine erste Prüfelektrode, eine zweite Prüfelektrode, sowie eine mit der ersten Prüfelektrode und mit der zweiten Prüfelektrode in elektrisch leitender Verbindung stehende Messvorrichtung umfasst, und wobei die Messvorrichtung dazu ausgebildet ist, den elektrischen Widerstand oder den Stromfluss zwischen der ersten Prüfelektrode und der Prüfelektrode Elektrode zu messen.

Es kann also gegebenenfalls eine Spannungsquelle mit einer konstanten Spannung vorgesehen sein. Gegebenenfalls kann die Polarität während der Messung wechselbar sein oder gewechselt werden.

Erfindungsgemäß ist vorgesehen, dass ein erstes Anschlusselement und ein zweites Anschlusselement vorgesehen sind, wobei das erste Anschlusselement und das zweite Anschlusselement zur Verbindung mit der Fluidabsperrvorrichtung, insbesondere mit den Anschlussvorrichtungen der Fluidabsperrvorrichtung, ausgebildet sind. Ferner ist vorgesehen, dass die erste Prüfelektrode am ersten Anschlusselement angeordnet ist, dass die zweite Prüfelektrode am zweiten Anschlusselement angeordnet ist, und dass das erste Anschlusselement und/oder das zweite Anschlusselement eine Fluidöffnung aufweisen.

Das erste Anschlusselement und das zweite Anschlusselement der erfindungsgemäßen Vorrichtung können an der Fluidabsperrvorrichtung befestigt sein, um eine dichte Verbindung zwischen Prüfvorrichtung und Fluidabsperrvorrichtung zu bilden. Üblicherweise verfügen bekannte Fluidabsperrvorrichtungen bereits über Anschlussvorrichtungen, die zur beidseitigen Verbindung der Fluidabsperrvorrichtung mit Rohrleitungen dienen. Die Anschlussvorrichtung kann beispielsweise als Flansch, Rohr, Gewinde, etc. ausgeführt sein, wobei die Anschlusselemente der erfindungsgemäßen Vorrichtung bevorzugt korrespondierende Verbindungsmittel aufweisen.

Gegebenenfalls ist vorgesehen, dass das erste Anschlusselement zur Bildung eines ersten Fluidraums in fluiddichtender Weise an eine erste Anschlussvorrichtung der Fluidabsperrvorrichtung anordenbar ist, und dass das zweite Anschlusselement zur Bildung eines zweiten Fluidraums in fluiddichtender Weise an eine zweite Anschlussvorrichtung der Fluidabsperrvorrichtung anordenbar ist.

Gegebenenfalls werden also durch das Zusammenwirken der Anschlusselemente und Teile der Fluidabsperrvorrichtung, insbesondere die Anschlussvorrichtungen, zwei abgeschlossene Fluidräume erzeugt. Bevorzugt sind die beiden so erzeugten Fluidräume durch das Absperrelement der Fluidabsperrvorrichtung getrennt oder trennbar. Eine fluiddichtende Verbindung zwischen der Prüfvorrichtung und der Fluidabsperrvorrichtung ist vorteilhaft, um zu vermeiden, dass Undichtheiten das Messergebnis verfälschen.

Der Begriff "Fluid" kann sich in Zusammenhang mit der vorliegenden Erfindung auf jedes beliebige Fluid beziehen, das ein einer Rohrleitung transportierbar ist, und dessen Fluss eine Fluidabsperrvorrichtung unterbrechen kann. Insbesondere kann sich der Begriff "Fluid" also auf eine Flüssigkeit oder ein Gas beziehen, wobei die Verwendung der erfindungsgemäßen Vorrichtung in Verbindung mit einer Flüssigkeit bevorzugt ist.

Der Begriff "fluiddichtend" bezeichnet also in Zusammenhang mit der vorliegenden Erfindung die Eigenschaft eines Elements, eines Teils oder einer Verbindung, ein bestimmtes Fluid nicht austreten zu lassen. Dabei bezieht sich die dichtende Eigenschaft insbesondere jeweils nur auf jenes Fluid, das gerade in Zusammenhang mit der erfindungsgemäßen Prüfvorrichtung verwendet wird. Ist beispielsweise das Prüffluid Wasser, muss eine "fluiddichtende Verbindung" undurchlässig für Wasser sein, nicht jedoch für Luft. Ist das Prüffluid jedoch ein Gas, muss eine "fluiddichtende Verbindung" undurchlässig für das entsprechende Gas sein.

Gegebenenfalls ist vorgesehen, dass an wenigstens einer Fluidöffnung, vorzugsweise an beiden Fluidöffnungen, zur Zuleitung bzw. zur Ableitung einer Prüfflüssigkeit eine Fluidleitung angeordnet ist.

Um die zu prüfende Fluidabsperrvorrichtung mit Prüffluid zu versorgen, und insbesondere um die Aufrechterhaltung eines konstanten Prüfdrucks zu gewährleisten, kann vorgesehen sein, dass an wenigstens einer Fluidöffnung eine Fluidleitung angeordnet ist. Ist an beiden Fluidöffnungen eine Fluidleitung angeordnet die dazu ausgeführt ist, einen Prüfdruck aufzubauen, kann die Prüfung in von beiden Seiten durchgeführt werden. Dies bedeutet, dass im Rahmen einer Prüfung beide Fluidräume mit Druck beaufschlagt werden können.

Gegebenenfalls ist vorgesehen, dass wenigstens eine Fluidleitung eine elektrisch isolierendes Isolationselement aufweist. Gegebenenfalls kann das elektrisch isolierende Isolationselement als elektrisch isolierende Kupplung ausgeführt sein.

Sind zwei Fluidleitungen vorgesehen, die beide in fluidleitender Verbindung mit einem gemeinsamen Fluidreservoir stehen, ist es vorteilhaft, ein Isolationselement einzusetzen, um eine elektrisch leitende Verbindung der beiden Prüfelektroden über die Fluidleitungen zu verhindern. Eine derartige elektrisch leitende Verbindung könnte zu einer Fehlmessung führen. Ein Isolationselement, die diesen Zweck erfüllt, muss jedenfalls zwei Abschnitte der Fluidleitung, die zu beiden Seiten der Kupplung liegen, voneinander elektrisch isolieren können. Beispielsweise kann das Isolationselement eine als Ventil ausgeführte Kupplung sein, die vollständig aus isolierendem Kunststoff gebildet ist. Alternativ können auch nur jene Flächen der Kupplung, die mit dem Fluid in Verbindung stehen oder mit diesem im Kontakt kommen elektrisch isolierende Eigenschaften aufweisen.

Alternativ kann das Isolationselement ein elektrisch isolierender Schlauch- oder Rohrabschnitt sein, welcher wenigstens an seiner Innenseite mit einer Beschichtung ausgeführt ist, an welcher das Prüffluid nicht haftet. Eine derartige Beschichtung kann beispielsweise eine Nanobeschichtung sein.

Gegebenenfalls ist vorgesehen, dass wenigstens ein Drucksensor vorgesehen ist, der dazu ausgebildet ist, den statischen Druck in einem Fluidraum der Fluidabsperrvorrichtung zu messen.

Ein Drucksensor dient der Festlegung eines bestimmten Prüfdrucks, der auf das Absperrelement wirkt. Ferner ist ein Drucksensor vorteilhaft, um die Aufrechterhaltung eines konstanten Prüfdrucks zu überwachen. Der Drucksensor kann beispielsweise direkt am ersten Anschlusselement und/oder am zweiten Anschlusselement angeordnet sein. Alternativ kann der Drucksensor auch an jeder beliebigen Stelle angeordnet sein, an welcher der statische Druck des Fluids dem statischen Druck des Fluids innerhalb wenigstens eines Teils der Fluidabsperrvorrichtung, insbesondere innerhalb eines Fluidsraums, entspricht. Sind mehrere Drucksensoren vorgesehen, ist es vorteilhaft, wenn diese dazu ausgeführt sind, den Druck in jeweils unterschiedlichen Fluidräumen zu messen.

Gegebenenfalls ist vorgesehen, dass am ersten Anschlusselement und/oder am zweiten Anschlusselement ein Speicherelement zum Speichern von Prüffluid angeordnet ist.

Das Speicherelement kann beispielsweise als Membranspeicher ausgeführt sein und dient insbesondere der Bereitstellung eines konstanten Prüfdrucks über die komplette Prüfdauer. Beim Befüllen des Fluidraums / der Fluidräume mit Prüffluid wird auch der Membranspeicher mit Prüffluid befüllt. Nach dem vollständigen Befüllen wird die Zufuhr des Prüffluids unterbrochen, weshalb der Prüfdruck vorerst konstant bleibt, solange es zu keiner Undichtheit des Absperrelements oder zu einer Volumsveränderung eines Fluidraums kommt. Beispielsweise würde sich der Prüfdruck verringern, wenn das Absperrelement dem Prüfdruck nachgibt und sich auswölbt. Aus dem Membranspeicher wird dann zusätzliches Prüffluid bereitgestellt, welches zur Aufrechterhaltung des Prüfdrucks dient. Gegebenenfalls kann das Speicherelement auch alternativ ausgeführt sein, solange es die vorstehend beschriebene Funktion erfüllt.

Gegebenenfalls ist vorgesehen, dass das erste Anschlusselement und/oder das zweite Anschlusselement wenigstens ein öffen- und schließbares Ventilelement umfasst.

Gegebenenfalls kann ein Teil der Fluidleitung ein Ventilelement umfassen. Ein Ventilelement kann vorgesehen sein, um bestimmte Fluidwege abzusperren. Die Fluidleitung kann verzweigt sein und an einer Fluidleitung können mehrere Ventilelemente vorgesehen sein.

Gegebenenfalls kann an wenigstens einer Fluidleitung ein Tropfensensor oder ein Durchflusssensor angeordnet sein. Bevorzugt ist vorgesehen, dass an wenigstens einem Ventilelement ein Tropfensensor oder ein Durchflusssensor angeordnet ist. Wenn ein Tropfensensor vorgesehen ist, kann die erfindungsgemäße Vorrichtung auch zur Durchführung eines Dichtheitsprüfungsverfahrens gemäß der Tropfenzählmethode verwendet werden. Wenn ein Durchflusssensor vorgesehen ist, kann die erfindungsgemäße Vorrichtung auch zur Durchführung eines Dichtheitsprüfungsverfahrens gemäß der Durchflussmethode verwendet werden. Gegebenenfalls können mehrere Prüfverfahren parallel durchgeführt werden. Dies bietet den Vorteil einer internen Methodenvalidierung, sowie einer Bereitstellung eines normgerechten Prüfverfahrens.

Gegebenenfalls ist vorgesehen, dass die erste Prüfelektrode und/oder die zweite Prüfelektrode zylinderförmig ist.

Eine zylinderförmige Prüfelektrode ist vorteilhaft, um Messschwankungen, die durch sich auf der Elektrodenoberfläche bildenden Belag hervorgerufen werden, zu minimieren. Bei einer massiven zylinderförmigen Elektrode ist beispielsweise im Vergleich zu einer Drahtelektrode die Oberfläche besonders groß. Gegebenenfalls kann die Prüfelektrode an ihrem zylinderförmigen Grundkörper eine kegelförmige Spitze aufweisen.

Gegebenenfalls ist vorgesehen, dass die erste Prüfelektrode und/oder die zweite Prüfelektrode in einer Ausnehmung des entsprechenden Anschlusselements angeordnet ist. Dadurch wird die Prüfelektrode vor mechanischen Einwirkungen geschützt.

Erfindungsgemäß ist vorgesehen, dass das erste Anschlusselement und/oder das zweite Anschlusselement zusätzlich eine Hilfselektrodenanordnung umfasst, wobei die Hilfselektrodenanordnung eine erste Hilfselektrode, eine zweite Hilfselektrode, und einen Prüffluidraum umfasst, wobei ein sich ändernder Stromfluss zwischen der ersten Hilfselektrode und der zweiten Hilfselektrode messbar ist.

Eine Hilfselektrodenanordnung dient der Bereitstellung der Möglichkeit einer Validierung der Messung. Die Hilfselektrodenanordnung kann zwei Elektroden umfassen, zwischen welchen Prüffluid angeordnet oder anordenbar ist. Die beiden Hilfselektroden sind erfindungsgemäß durch kein Absperrelement voneinander getrennt, das Prüffluid kann zwischen ihnen also frei fließen. Im bestimmungsgemäßen Gebrauch der Prüfvorrichtung soll also zwischen zwei Hilfselektroden immer ein elektrischer Strom messbar sein. Wenn zwischen den Hilfselektroden einer Hilfselektrodenanordnung ein elektrischer Strom messbar ist, ist die Vorrichtung in funktionsfähigem Zustand. Zusätzlich kann die Hilfselektrodenanordnung zur Bestimmung eines Referenzwerts für die Leifähigkeit oder den Widerstand des Prüffluids verwendet werden. Gegebenenfalls ist vorgesehen, dass eine Absaugvorrichtung zur Erzeugung eines Unterdrucks in der Prüfvorrichtung und der Fluidabsperrvorrichtung vorgesehen ist.

Bei der Befüllung der Prüfvorrichtung und der Absperrvorrichtung, insbesondere der Fluidräume, mit Prüffluid kann es vorkommen, dass Bereiche nicht vollständig mit Prüffluid benetzt werden. Dies kann insbesondere Bereiche mit Bohrungen, Hinterschneidungen oder anderen feinen Strukturen betreffen. Bevorzugt sollen auch diese Bereiche mit Prüffluid befüllt werden, um etwaige fehlerhafte Messergebnisse zu vermeiden. Die Absaugvorrichtung kann beispielsweise als Vakuumpumpe ausgebildet sein. Der Begriff "Unterdruck" bezeichnet insbesondere einen Druck, der unter 1 bar liegt, bevorzugt unter 0,5 bar, mehr bevorzugt unter 0,2 bar.

Eine weitere Möglichkeit, alle Bereiche der Absperrvorrichtung vollständig mit Prüffluid zu benetzen besteht darin, eine Lageänderung der Prüfvorrichtung vorzunehmen.

Gegebenenfalls kann eine Schwenkvorrichtung vorgesehen sein, um die Prüfvorrichtung zu schwenken. Beispielsweise kann die Prüfvorrichtung mittels der Schwenkvorrichtung aus der horizontalen Lage um wenigstens etwa 90° geschwenkt werden. Um alle Fluidräume optimal zu entlüften und mit Prüffluid zu benetzen, kann die Schwenkung gegebenenfalls mehr als etwa 120° betragen.

Die Erfindung kann ferner eine Anordnung einer erfindungsgemäßen Prüfvorrichtung mit einer Fluidabsperrvorrichtung betreffen.

Gegebenenfalls ist vorgesehen, dass die Fluidräume der Fluidabsperrvorrichtung im Wesentlichen vollständig mit einem Prüffluid gefüllt oder füllbar sind. Gegebenenfalls wird der statische Druck des Prüffluids gemäß EN 12266 P12 gewählt. Gegebenenfalls beträgt der statische Druck des Prüffluids wenigstens 5 bar, vorzugsweise wenigstens 10 bar, mehr bevorzugt wenigstens 20 bar. Gegebenenfalls beträgt der statische Druck des Prüffluids mehr als 30 bar.

Die Erfindung kann ferner ein Verfahren zur Dichtheitsprüfung einer Fluidabsperrvorrichtung mit einer erfindungsgemäßen Prüfvorrichtung betreffen. Das erfindungsgemäße Verfahren kann folgende Schritte umfassen:
- Befüllen der Fluidabsperrvorrichtung mit einem Prüffluid, vorzugsweise elektrisch leitendes Wasser,
- Schließen des Absperrelements,
- Aufbauen eines Prüfdrucks auf das Prüffluid,
- Messen des elektrischen Widerstands oder des Stromflusses zwischen einer ersten Elektrode und einer zweiten Elektrode, wobei die Elektroden auf unterschiedlichen Seiten des Absperrelements angeordnet sind.

Gegebenenfalls ist vorgesehen, dass das Prüffluid Wasser ist. Bevorzugt ist die Leitfähigkeit des Prüffluids konstant. Gegebenenfalls kann den Prüffluid ein Salz oder eine Puffersubstanz zugesetzt sein, um eine bestimmte Leitfähigkeit oder einen bestimmten pH-Wert einzustellen. Gegebenenfalls kann eine Thermostatvorrichtung vorgesehen sein, um das Prüffluid zu temperieren oder auf einer konstanten Temperatur zu halten.

Weitere Merkmale der Erfindung ergeben sich aus den Patentansprüchen den Figuren, sowie aus der Beschreibung des Ausführungsbeispiels.

Nachfolgend wird die Erfindung anhand eines exemplarischen Ausführungsbeispiels im Detail erläutert.

Es zeigen:
Fig. 1 eine schematische Ansicht einer Fluidabsperrvorrichtung in einer Anordnung für die Dichtheitsprüfung gemäß dem Stand der Technik;
Fig. 2 eine schematische Darstellung der Elemente einer Anordnung einer erfindungsgemäßen Prüfvorrichtung mit einer Fluidabsperrvorrichtung gemäß einem ersten erfindungsgemäßen Ausführungsbeispiel;
Fig. 3 eine schematische Darstellung der Elemente einer Anordnung einer erfindungsgemäßen Prüfvorrichtung mit einer Fluidabsperrvorrichtung gemäß einem zweiten erfindungsgemäßen Ausführungsbeispiel;
Fig. 4 eine schematische Darstellung der Elemente einer Anordnung einer erfindungsgemäßen Prüfvorrichtung mit einer Fluidabsperrvorrichtung gemäß einem dritten erfindungsgemäßen Ausführungsbeispiel.

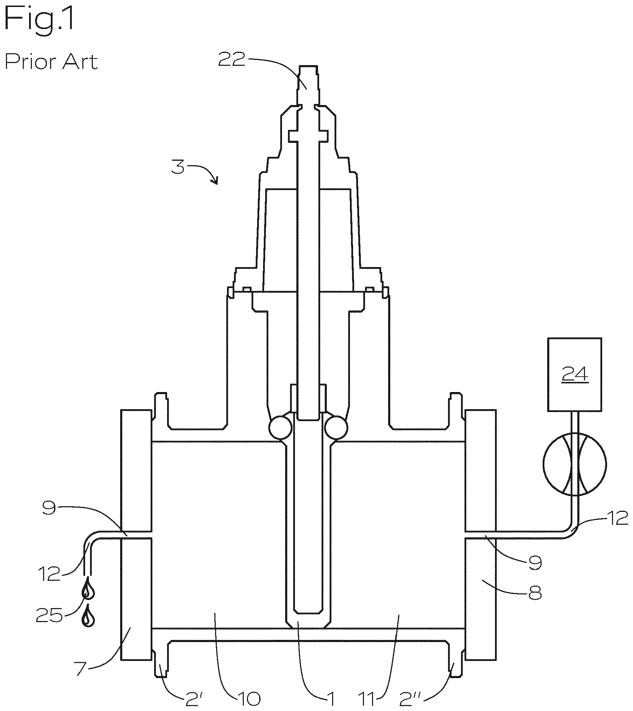

Fig. 1 zeigt eine schematische Ansicht einer Fluidabsperrvorrichtung 3 in einer Anordnung für die Dichtheitsprüfung gemäß dem Stand der Technik. Die Fluidabsperrvorrichtung 3 umfasst zwei Anschlussvorrichtungen 2, die beidseitig eines Absperrelements 1 angeordnet sind. Das Absperrelement 1 ist in diesem Beispiel als Schieberkeil ausgeführt, welcher durch Drehen der Schieberspindel 22 bewegt werden kann. Fig. 1 zeigt das Absperrelement 1 in vollständig geschlossener Stellung.

An der ersten Anschlussvorrichtung 2' ist ein erstes Anschlusselement 7 angeordnet, während an der zweiten Anschlussvorrichtung 2" ein zweites Anschlusselement 8 angeordnet ist. Durch die Anschlussvorrichtungen 2 und die Anschlusselemente 7, 8 wird zu beiden Seiten des Absperrelements 1 ein Fluidraum 10, 11 gebildet. In dieser Darstellung ist der erste Fluidraum 10 links des Absperrelements 1 und der zweite Fluidraum rechts des Absperrelements 1 dargestellt. Jedes Anschlusselement 7, 8 verfügt über eine Fluidöffnung 9, welche zur Zu- und Ableitung des Prüffluids geeignet ist.

Im dargestellten Ausführungsbeispiel sind beide Fluidräume 10, 11 bereits vollständig mit Prüffluid befüllt und das Absperrelement 1 ist vollständig geschlossen. Das Prüffluid wird durch die in die Fluidöffnung 9 des zweiten Anschlusselements 8 mündende Fluidleitung 12 durch die Fluidpumpe 24 bereitgestellt. Die Fluidpumpe 24 ist dazu ausgeführt, einen geeigneten Prüfdruck aufbringen zu können.

Das Prüffluid ist in diesem Ausführungsbeispiel Wasser und der Prüfdruck im zweiten Fluidraum 11 beträgt etwa 17,6 bar. Da das Absperrelement 1 ein mit Gummi beschichteter Schieberkeil ist, gibt dieser in den ersten Minuten der Prüfung leicht nach, was zu einer Verdrängung des Prüffluids im ersten Fluidraum 10 führt. Die Anschlussvorrichtung kann auch durch die vom Absperrelement 1 kommende Axialkraft gestaucht werden, was das Volumen des zweiten Fluidraums 11 verringern kann. Dadurch wird Prüffluid aus der Fluidöffnung 9 des ersten Anschlusselements 7 in die zugehörige Fluidleitung 12 gedrückt, weshalb Tropfen 25 des Prüffluids aus der Fluidleitung 12 austreten.

Dieses Austreten von Tropfen 25 des Prüffluids würde eigentlich eine Undichtheit der Fluidabsperrvorrichtung 3 anzeigen, jedoch kommt es nach einer Equilibrierungsphase zu einer Einstellung der Tropfenbildung, wodurch gezeigt ist, dass die Tropfenbildung nicht durch eine Undichtheit der Fluidabsperrvorrichtung 3 hervorgerufen wurde, sondern durch die anfängliche Deformation des Absperrelements 1. Der Prüfdruck wird für 5 Stunden aufrechterhalten, bis der zeitliche Abstand zwischen Tropfen 25 etwa 3 Minuten beträgt, wodurch eine hinreichende Dichtheit der Absperrvorrichtung 3 bestätigt werden kann.

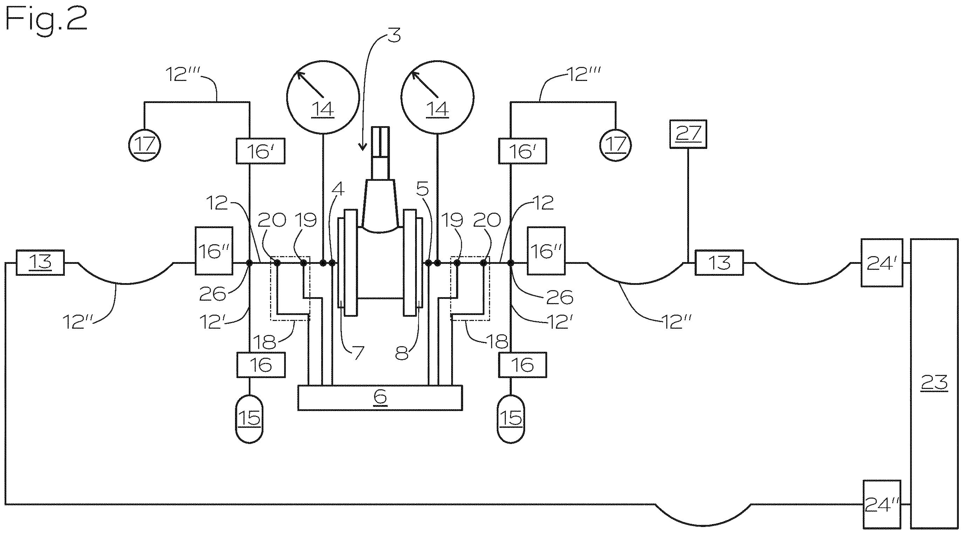

Fig. 2 zeigt eine schematische Darstellung der Elemente einer Anordnung einer erfindungsgemäßen Prüfvorrichtung mit einer Fluidabsperrvorrichtung 3 gemäß einem ersten erfindungsgemäßen Ausführungsbeispiel. Es wird dieselbe Fluidabsperrvorrichtung 3 gezeigt, die schon in Fig. 1 beschrieben wurde. Die Fluidabsperrvorrichtung 3 umfasst also zwei Anschlussvorrichtungen 2, die beiderseits eines Absperrelements 1 angeordnet sind, welches als gummierter Schieberkeil ausgeführt ist. Das Absperrelement 1 kann durch Drehen der Schieberspindel 22 betätigt werden und es befindet sich in dieser Ansicht in vollständig geschlossener Stellung.

An den Anschlussvorrichtungen 2 der Fluidabsperrvorrichtung 3 sind Anschlusselemente 7, 8 der erfindungsgemäßen Prüfvorrichtung angeordnet, wodurch zu beiden Seiten des Absperrelements 1 Fluidräume 10, 11 gebildet werden.

Jedes Anschlusselement 7, 8 weist eine Fluidöffnung 9 auf, an welcher jeweils eine Fluidleitung 12 angeordnet ist. Jede Fluidleitung 12 weist mehrere Verzweigungen 26 auf. In der Fluidleitung 12, die am ersten Anschlusselement 7 angeordnet ist, liegt die erste Prüfelektrode 4. In der Fluidleitung 12, die am zweiten Anschlusselement 8 angeordnet ist, liegt die zweite Prüfelektrode 5. Die Prüfelektroden 4, 5 liegen innerhalb der Fluidleitungen 12, sodass sie mit dem Prüffluid in Kontakt gebracht werden können oder mit diesem in Kontakt stehen. Die erste Prüfelektrode 4 und die zweite Prüfelektrode 5 sind mit einer Messvorrichtung 6 verbunden, sodass der elektrische Widerstand zwischen den Prüfelektroden 4, 5 gemessen werden kann.

Mit den Fluidleitungen 12 ist jeweils auch ein Drucksensor 14 verbunden, der dazu ausgeführt ist, den Druck, insbesondere den hydrostatischen Druck, des Prüffluids innerhalb der Fluidleitung 12 bzw. des jeweils entsprechenden Abschnitts der Fluidleitung 12 zu bestimmen. Der gemessene Druck entspricht jenem Druck, der von der jeweiligen Seite auf das Absperrelement 1 wirkt, da zwischen der Position an welcher der Druck gemessen wird und dem jeweiligen Fluidraum 10, 11 kein nennenswerter Druckabfall zu erwarten ist.

Weiters sind in beiden Fluidleitungen 12 Hilfselektrodenanordnungen 18 angeordnet, wobei jede Hilfselektrodenanordnung 18 eine erste Hilfselektrode 19 und eine zweite Hilfselektrode 20 umfasst. Die Hilfselektroden 19, 20 sind ebenfalls mit der Messvorrichtung 6 verbunden, sodass der elektrische Widerstand zwischen den Hilfselektroden 19, 20 gemessen werden kann.

In anderen Beispielen können der Hilfselektrodenanordnung 18 oder den Hilfselektrodenanordnungen 18 separate Messvorrichtungen zugeordnet sein, die von der Messvorrichtung 6 unabhängig sind. In anderen Beispielen kann eine Prüfelektrode 4, 5 auch als Hilfselektrode 19, 20 verwendet werden, sodass jeweils pro Hilfselektrodenanordnung 18 nur eine weitere separate Hilfselektrode 19, 20 vorgesehen sein muss.

Anschließend an die Hilfselektrodenanordnung 18 ist in den Fluidleitungen 12 jeweils eine Verzweigung 26 vorgesehen, welche die Fluidleitungen 12 in jeweils drei getrennte Fluidleitungen 12', 12", 12‴ aufteilt. Die Fluidleitung 12' führt zu einem Speicherelement 15. Die Fluidleitung 12" führt zu einem Isolationselement 13 und von dieser weiter zu Fluidpumpe 24 und Fluidreservoir 23. Die Fluidleitung 12‴ führt zu einem Tropfensensor 17. In allen Fluidleitungen 12 ist ein Ventilelement 16 vorgesehen, um den Fluss des Prüffluids zu jedem der oben genannten Elemente freigeben oder absperren zu können.

Die Ventilelemente 16 sind in diesem Beispiel Kugelventile, können jedoch beliebig ausgeführt sein, solange sie dazu geeignet sind, den Fluss des Fluids zu unterbrechen bzw. freizugeben.

Der Tropfensensor 17 ist eine Vorrichtung, die geeignet ist, um aus der Fluidleitung 12" austretende Tropfen 25 zu detektieren, gegebenenfalls zu zählen und den zeitlichen Abstand zwischen zwei Tropfen 25 aufzuzeichnen.

Das Isolationselement 13 ist in diesem Beispiel ein Kugelventil mit kunststoffbeschichteten Oberflächen, um eine elektrische Isolierung der beidseitig des Isolationselements 13 liegenden Abschnitte der Fluidleitung 12" zu ermöglichen.

Das Speicherelement 15 ist in diesem Beispiel als Membranspeicher ausgeführt, welcher dazu geeignet ist, Unterschiede des hydrostatischen Drucks in der Fluidleitung 12 bzw. in einem Fluidraum 10, 11 auszugleichen.

Die Fluidpumpen 24 sind dazu ausgeführt, den erforderlichen Fluiddruck aufzubauen. In diesem Ausführungsbeispiel sind die Fluidpumpen 24 dazu ausgeführt, einen Fluiddruck von wenigstens 20 bar aufbauen zu können.

Die Elemente der Prüfvorrichtung sind im Wesentlichen symmetrisch angeordnet, um die Fluidabsperrvorrichtung 3 von beiden Seiten mit einem Prüfdruck beaufschlagen zu können.

Nachfolgend wird die bestimmungsgemäße Verwendung der Prüfvorrichtung aus dem beschriebenen Ausführungsbeispiel exemplarisch beschrieben, wobei eine Beaufschlagung des Absperrelements 1 mit Druck von der rechten Seite erfolgt:
Die Anschlussvorrichtungen 2 der zu prüfenden Fluidabsperrvorrichtung 13 werden mit den Anschlusselementen 7, 8 der Prüfvorrichtung in flüssigkeitsdichtender Weise verbunden. Dies erfolgt in diesem Ausführungsbeispiel über Flanschverbindungen. In anderen nicht gezeigten Ausführungsbeispielen kann die flüssigkeitsdichtende Verbindung auch über alternative im Stand der Technik bekannte Mittel, wie beispielsweise Gewindeverbindungen hergestellt werden. Durch die Verbindung werden die Fluidräume 10, 11 gebildet. Das Absperrelement 1 wird zumindest teilweise geöffnet, um eine durchgängige Verbindung zwischen erstem Fluidraum 10 und zweitem Fluidraum 11 zu schaffen.

Das Prüffluid ist im beschriebenen Ausführungsbeispiel Leitungswasser. In anderen nicht näher beschriebenen Ausführungsbeispielen kann dem Prüffluid beispielsweise Natriumchlorid als Leitsalz mit einer Konzentration von etwa 100 mg/L zugesetzt werden.

Mittels der Absaugpumpe 27 wird ein Unterdruck in der Absperrvorrichtung 3 und in den Fluidleitungen 12 erzeugt. Nun wird aus dem Fluidreservoir 23 mit der Pumpe 24' Prüffluid in die Prüfvorrichtung und die Fluidabsperrvorrichtung 3 gefördert, bis alle Fluidleitungen 12 und die Fluidräume 10, 11 der Fluidabsperrvorrichtung 3 vollständig mit Prüffluid befüllt sind. Die vorherige Erzeugung eines Unterdrucks dient der Minimierung von Lufteinschlüssen und der Befüllung von Bereichen, in die Prüffluid sonst nur schwer vordringen kann. Derartige Bereiche sind beispielsweise kleinere Kavitäten oder Hinterschneidungen.

Sind alle fluidführenden Bereiche vollständig und blasenfrei mit Prüffluid befüllt, wird das Absperrelement 1 durch Betätigen der Schieberspindel 22 vollständig geschlossen, wodurch die Fluidräume 10, 11 räumlich voneinander getrennt werden. Mittels der Fluidpumpe 24' wird ein Prüfdruck von etwa 17,6 bar aufgebaut, der nun vom zweiten Fluidraum 11 aus auf das Absperrelement 3 wirkt. Da alle Ventilelemente 16 bis auf die zum Tropfensensor 17 führenden Ventilelemente 16' und auch die Isolationselemente 13 mechanisch verbunden und geöffnet sind, ist auch das Speicherelement 15 mit Prüffluid befüllt und mit dem Prüfdruck beaufschlagt. Das Speicherelement 15 wirkt als Druckausgleichsvorrichtung.

Nach der Befüllung mit Prüffluid werden die Ventile 16" geschlossen und die Isolationselemente 13 geschlossen und dadurch die mechanische Verbindung getrennt, sodass das Prüffluid auf beiden Seiten des Absperrelements 1 nicht mehr über die Fluidleitungen 12" und das Fluidreservoir 23 in elektrisch leitender Verbindung steht. Dies dient der Vermeidung einer "elektrischen Rückkopplung" während der Widerstandsmessung, was zu fehlerhaften Messresultaten führen kann. Die einzige mögliche elektrisch leitende Verbindung zwischen den Prüfelektroden 4, 5 durch das Prüffluid führt nun durch die Fluidräume 10, 11.

Nach dem Betätigen der Isolationselemente 13 wird der hydrostatische Druck im zweiten Fluidraum 11 durch den entsprechenden Drucksensor 14 überwacht. Eventuell auftretende Druckverluste können durch das Speicherelement 15 ausgeglichen werden.

Die Dichtheitsmessung beginnt mit einer Messung des Widerstands zwischen der ersten Prüfelektrode 4 und der zweiten Prüfelektrode 5. Zur Validierung der Messung werden die Hilfselektrodenanordnungen 18 eingesetzt, wobei der elektrische Widerstand zwischen der jeweils ersten Hilfselektrode 19 und der zweiten Hilfselektrode 20 einer Hilfselektrodenanordnung 18 bestimmt wird. Da zwischen zwei Hilfselektroden 19, 20 einer Hilfselektrodenanordnung 18 keine Absperrung für das Prüffluid vorgesehen ist, ist zwischen zwei Hilfselektroden 19, 20 einer Hilfselektrodenanordnung 18 jedenfalls ein Stromfluss feststellbar. Zusätzlich kann der gemessene Widerstand zwischen zwei Hilfselektroden 19, 20 einer Hilfselektrodenanordnung 18 als Referenzwert für die Dichtheitsmessung verwendet werden, da die Grundleitfähigkeit des Prüffluids bestimmt werden kann.

Der Prüfdruck wird einige Zeit aufrechterhalten und der Verlauf des elektrischen Widerstands wird beobachtet. Bleibt der Widerstand auf konstant niedrigem Niveau bzw. ist dieser nicht messbar, wird die Fluidabsperrvorrichtung 3 als dicht angesehen. Der Grenzwiderstand, ab welchem eine Fluidabsperrvorrichtung 3 als dicht angesehen wird hängt von verschiedenen Faktoren, wie der Grundleitfähigkeit des Prüffluids, dem Prüfdruck, etc. ab. In diesem Ausführungsbeispiel wurde das auf das Absperrelement ausgeübte Drehmoment solange erhöht, bis ein Widerstand von etwa 5 MΩ gemessen wurde. Dann wurde das Drehmoment erhöht, bis ein Widerstand von etwa 6,6 MΩ gemessen wurde. Es wurde eine weitere Erhöhung des Drehmoments durchgeführt, bis der gemessene Widerstand etwa 10 MΩ betrug. Zuletzt wurde das Drehmoment erhöht, bis ein Widerstand von etwa 21 MΩ gemessen wurde.

Zusätzlich zur Widerstandsmessung kann unter Verwendung der erfindungsgemäßen Prüfvorrichtung auch eine konventionelle Tropfprüfung durchgeführt werden. Dies erfolgt durch Öffnen des Ventilelements 16' in der Fluidleitung 12‴ auf der Seite des ersten Anschlusselements 7. Undichtheiten können durch den Tropfensensor 17 festgestellt werden, wodurch eine weitere Validierung der Dichtheitsprüfung erfolgen kann. In diesem ersten Ausführungsbeispiel betrug der Tropfabstand bei 5 MΩ 24 Sekunden, bei 6,6 MΩ 38 Sekunden, bei 10 MΩ 110 Sekunden. Bei 21 MΩ war der Tropfabstand nicht mehr feststellbar.

Die Prüfung kann direkt im Anschluss von der linken Seite erfolgen, indem der Prüfdruck vom ersten Fluidraum 10 aus durch die Fluidpumpe 24" aufgebracht wird. Nach Abschluss der Prüfung wird die Vorrichtung entspannt und das Prüffluid wird abgelassen.

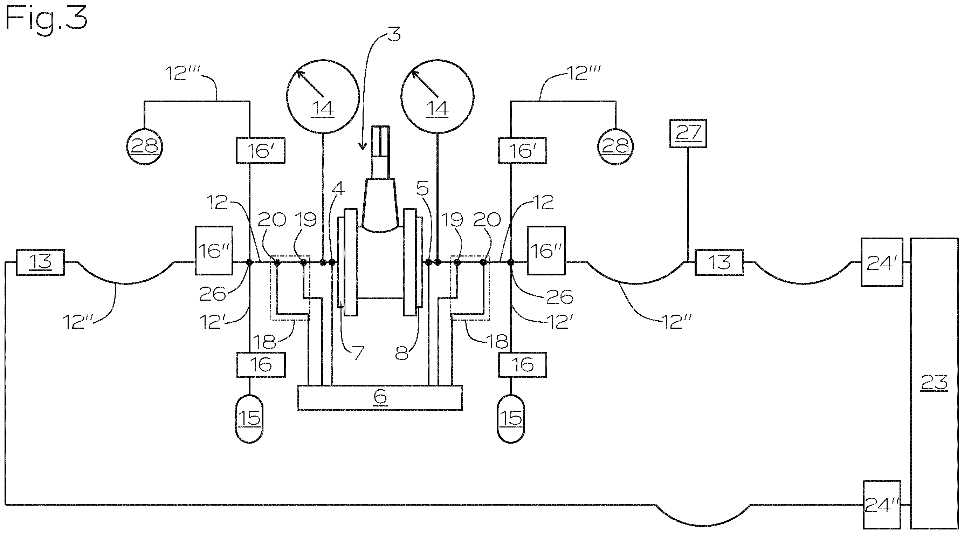

Fig. 3 zeigt eine schematische Darstellung der Elemente einer Anordnung einer erfindungsgemäßen Prüfvorrichtung mit einer Fluidabsperrvorrichtung 3 gemäß einem zweiten erfindungsgemäßen Ausführungsbeispiel. Die gezeigten Elemente entsprechen jenen im obenstehend beschriebenen ersten Ausführungsbeispiel, bis auf die Tatsache, dass anstelle der Tropfensensoren 17 Durchflussmesser 28 vorgesehen sind. Der Durchflussmesser 28 ist als Alternative zum Tropfensensor 17 dazu ausgeführt, einen Fluss des Prüffluids festzustellen.

Für alle anderen Elemente und deren Funktion wird auf die Beschreibung des ersten Ausführungsbeispiels verwiesen.

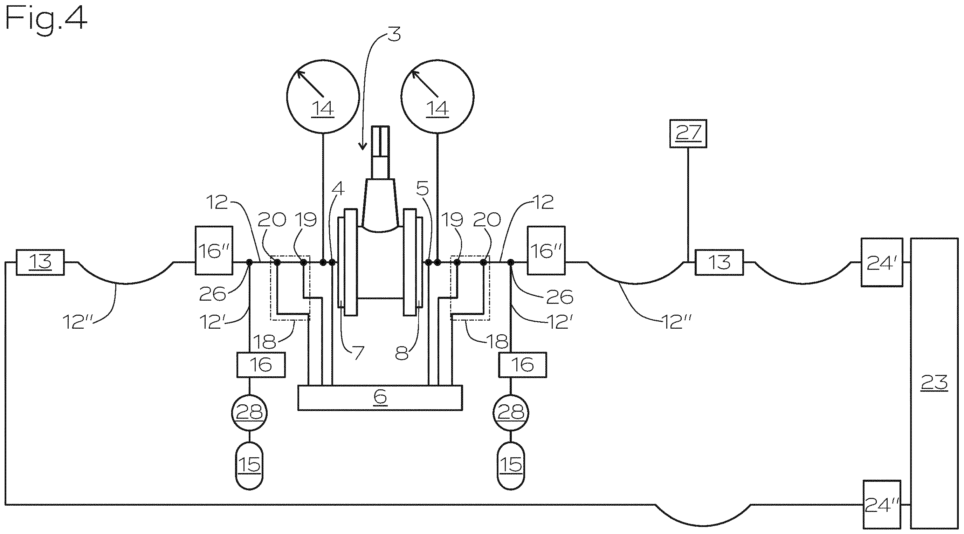

Fig. 4 zeigt eine schematische Darstellung der Elemente einer Anordnung einer erfindungsgemäßen Prüfvorrichtung mit einer Fluidabsperrvorrichtung 3 gemäß einem dritten erfindungsgemäßen Ausführungsbeispiel. Die gezeigten Elemente entsprechen jenen im obenstehend beschriebenen ersten Ausführungsbeispiel, bis auf die Tatsache, dass die Fluidleitung 12‴ mit Ventil 16' und Tropfensensor fehlt. Stattdessen ist in der Fluidleitung 12' zwischen Membranspeicher 15 und Ventil 16' ein Durchflussmesser 28 angeordnet, welcher dazu ausgeführt ist, den Zufluss von Prüffluid aus dem Speicherelement 15 festzustellen. Wird ein solcher Fluss festgestellt, bedeutet dies, dass aufgrund eines Druckverlusts in der Prüfvorrichtung bzw. im Fluidraum 11 Prüffluid vom Speicherelement 15 nachgeliefert wird. Im Gleichgewichtszustand der Prüfvorrichtung bedeutet dies eine Undichtheit der Fluidabsperrvorrichtung 3.

Für alle anderen Elemente und deren Funktion wird auf die Beschreibung des ersten Ausführungsbeispiels verwiesen.

### Bezugszeichenliste

- 1: Absperrelement
- 2: Anschlussvorrichtung
- 3: Fluidabsperrvorrichtung
- 4: Erste Prüfelektrode
- 5: Zweite Prüfelektrode
- 6: Messvorrichtung
- 7: Erstes Anschlusselement
- 8: Zweites Anschlusselement
- 9: Fluidöffnung
- 10: Erster Fluidraum
- 11: Zweiter Fluidraum
- 12: Fluidleitung
- 13: Isolationselement
- 14: Drucksensor
- 15: Speicherelement
- 16: Ventilelement
- 17: Tropfensensor
- 18: Hilfselektrodenanordnung
- 19: Erste Hilfselektrode
- 20: Zweite Hilfselektrode
- 21: Prüffluidraum
- 22: Schieberspindel
- 23: Fluidreservoir
- 24: Fluidpumpe
- 25: Tropfen
- 26: Verzweigung
- 27: Absaugpumpe
- 28: Durchflussmesser

## Patentansprüche

1. **Fluidabsperrvorrichtung (3),** umfassend eine Prüfvorrichtung zur Dichtheitsprüfung, die ein bewegbares und mit Druck beaufschlagbares, elektrisch isolierendes Absperrelement (1) sowie zwei beidseitig des Absperrelements angeordnete Anschlussvorrichtungen (2) umfasst,
- wobei die Prüfvorrichtung eine erste Prüfelektrode (4), eine zweite Prüfelektrode (5), sowie eine mit der ersten Prüfelektrode (4) und mit der zweiten Prüfelektrode (5) in elektrisch leitender Verbindung stehende Messvorrichtung (6) umfasst,
- wobei die Messvorrichtung (6) dazu ausgebildet ist, den elektrischen Widerstand oder den Stromfluss zwischen der ersten Prüfelektrode (4) und der zweiten Prüfelektrode (5) zu messen,
- wobei ein erstes Anschlusselement (7) und ein zweites Anschlusselement (8) vorgesehen sind, wobei das erste Anschlusselement (7) und das zweite Anschlusselement (8) zur Verbindung mit der Fluidabsperrvorrichtung (3), insbesondere mit den Anschlussvorrichtungen (2) der Fluidabsperrvorrichtung (3) ausgebildet sind,
- wobei die erste Prüfelektrode (4) am ersten Anschlusselement (7) angeordnet ist,
- wobei die zweite Prüfelektrode (5) am zweiten Anschlusselement (8) angeordnet ist, und
- wobei das erste Anschlusselement (7) und/oder das zweite Anschlusselement (8) eine Fluidöffnung (9) aufweisen,
**dadurch gekennzeichnet, dass** das erste Anschlusselement (7) und/oder das zweite Anschlusselement (8) zusätzlich eine Hilfselektrodenanordnung (18) umfasst, wobei die Hilfselektrodenanordnung (18) eine erste Hilfselektrode (19), eine zweite Hilfselektrode (20), und einen Prüffluidraum (21) umfasst, wobei ein elektrischer Widerstand zwischen der ersten Hilfselektrode (19) und der zweiten Hilfselektrode (20) messbar ist, und wobei die erste Hilfselektrode (19) und die zweite Hilfselektrode (20) nicht durch ein Absperrelement (1) voneinander getrennt sind.

2. Fluidabsperrvorrichtung (3) nach Anspruch 1, **dadurch gekennzeichnet, dass** das erste Anschlusselement (7) zur Bildung eines ersten Fluidraums (10) in fluiddichtender Weise an eine erste Anschlussvorrichtung (2') der Fluidabsperrvorrichtung (3) anordenbar ist, und dass das zweite Anschlusselement (8) zur Bildung eines zweiten Fluidraums (11) in fluiddichtender Weise an eine zweite Anschlussvorrichtung (2") der Fluidabsperrvorrichtung (3) anordenbar ist.

3. Fluidabsperrvorrichtung (3) nach Anspruch 1 oder 2, **dadurch gekennzeichnet, dass** an wenigstens einer Fluidöffnung (9), vorzugsweise an beiden Fluidöffnungen (9), zur Zuleitung bzw. zur Ableitung einer Prüfflüssigkeit eine Fluidleitung (12) angeordnet ist.

4. Fluidabsperrvorrichtung (3) nach Anspruch 3, **dadurch gekennzeichnet, dass** wenigstens eine Fluidleitung (12) ein elektrisch isolierendes Isolationselement (13), vorzugsweise eine elektrisch isolierende Kupplung aufweist.

5. Fluidabsperrvorrichtung (3) nach einem der Ansprüche 1 bis 4, **dadurch gekennzeichnet, dass** wenigstens ein Drucksensor (14) vorgesehen ist, der dazu ausgebildet ist, den statischen Druck in einem Fluidraum (10, 11) der Fluidabsperrvorrichtung (3) zu messen.

6. Fluidabsperrvorrichtung (3) nach einem der Ansprüche 1 bis 5, **dadurch gekennzeichnet, dass** am ersten Anschlusselement (7) und/oder am zweiten Anschlusselement (8) ein Speicherelement (15) zum Speichern von Prüffluid angeordnet ist.

7. Fluidabsperrvorrichtung (3) nach einem der Ansprüche 1 bis 6, **dadurch gekennzeichnet, dass** das erste Anschlusselement (7) und/oder das zweite Anschlusselement (8) wenigstens ein öffen- und schließbares Ventilelement (16) umfasst.

8. Fluidabsperrvorrichtung (3) nach Anspruch 7, **dadurch gekennzeichnet, dass** an wenigstens einer Fluidleitung (12) ein Tropfensensor (17) und/ oder ein Durchflussmesser (28) angeordnet ist.

9. Fluidabsperrvorrichtung (3) nach einem der Ansprüche 1 bis 8, **dadurch gekennzeichnet, dass** die erste Prüfelektrode (4) und/oder die zweite Prüfelektrode (5) zylinderförmig ist, und/ oder dass die erste Prüfelektrode (4) und/oder die zweite Prüfelektrode (5) in einer Ausnehmung des entsprechenden Anschlusselements (7, 8) angeordnet ist.

10. Fluidabsperrvorrichtung (3) nach einem der Ansprüche 1 bis 9, **dadurch gekennzeichnet, dass** eine Absaugvorrichtung (27) zur Erzeugung eines Unterdrucks in der Prüfvorrichtung und der Fluidabsperrvorrichtung (3) vorgesehen ist, oder dass eine Schwenkvorrichtung zur Lageänderung der Prüfvorrichtung vorgesehen ist.

11. Fluidabsperrvorrichtung (3) nach einem der Ansprüche 2 bis 10, **dadurch gekennzeichnet, dass** die Fluidräume (10, 11) der Fluidabsperrvorrichtung (3) im Wesentlichen vollständig mit einem Prüffluid gefüllt oder füllbar sind, und dass der statische Druck des Prüffluids vorzugsweise gemäß EN 12266 P12 gewählt wird.

12. Fluidabsperrvorrichtung (3) nach einem der Ansprüche 1 bis 11, **dadurch gekennzeichnet, dass** das Absperrelement (1) der Fluidabsperrvorrichtung (3) mit einem statischen Druck belastet oder belastbar ist.

13. Verfahren zur Dichtheitsprüfung einer Fluidabsperrvorrichtung (3) nach einem der vorhergehenden Ansprüche, umfassend die Schritte:
- Befüllen der Fluidabsperrvorrichtung (3) mit einem Prüffluid, vorzugsweise elektrisch leitendes Wasser,
- Schließen des Absperrelements (1),
- Aufbauen eines Prüfdrucks auf das Prüffluid,
- Messen des elektrischen Widerstands oder des Stromflusses zwischen einer ersten Prüfelektrode (4) und einer zweiten Prüfelektrode (5), wobei die Prüfelektroden (4, 5) auf unterschiedlichen Seiten des Absperrelements (1) angeordnet sind.

14. Verfahren nach Anspruch 13, **dadurch gekennzeichnet, dass** das Prüffluid Wasser ist, wobei das Wasser vorzugsweise eine konstante Leitfähigkeit aufweist.

## Claims

1. A **fluid shut-off device (3),** comprising a testing device for leak testing, which comprises a movable and pressurisable, electrically insulating shut-off element (1) and a connecting device (2) on each of the two sides of the shut-off element,
- wherein the testing device comprises a first testing electrode (4), a second testing electrode (5), and a measuring device (6) in electrically conductive connection with the first testing electrode (4) and with the second testing electrode (5),
- wherein the measuring device (6) is configured to measure the electrical resistance or the current flow between the first test electrode (4) and the second test electrode (5),
- wherein a first connecting element (7) and a second connecting element (8) are provided, wherein the first connecting element (7) and the second connecting element (8) are configured for connecting to the fluid shut-off device (3), in particular to the connecting devices (2) of the fluid shut-off device (3),
- wherein the first testing electrode (4) is arranged at the first connecting element (7),
- wherein the second test electrode (5) is arranged on the second connecting element (8), and
- wherein the first connecting element (7) and/or the second connecting element (8) have a fluid opening (9),
**characterised in that** the first connecting element (7) and/or the second connecting element (8) additionally comprises an auxiliary electrode assembly (18), wherein the auxiliary electrode assembly (18) comprises a first auxiliary electrode (19), a second auxiliary electrode (20) and a test fluid chamber (21), wherein an electrical resistance between the first auxiliary electrode (19) and the second auxiliary electrode (20) is measurable, and wherein the first auxiliary electrode (19) and the second auxiliary electrode (20) are not separated from each other by a shut-off element (1).

2. The fluid shut-off device (3) according to claim 1, **characterised in that** the first connecting element (7) is arrangeable in a fluid-tight manner on a first connecting device (2') of the fluid shut-off device (3) to form a first fluid chamber (10), and **in that** the second connecting element (8) is arrangeable in a fluid-tight manner on a second connecting device (2") of the fluid shut-off device (3) to form a second fluid chamber (11).

3. The fluid shut-off device (3) according to claim 1 or 2, **characterised in that** a fluid conduit (12) is arranged at at least one fluid opening (9), preferably at both fluid openings (9), for supplying or discharging a test fluid.

4. The fluid shut-off device (3) according to claim 3, **characterised in that** at least one fluid conduit (12) has an electrically insulating insulating element (13), preferably an electrically insulating coupling.

5. The fluid shut-off device (3) according to one of claims 1 to 4, **characterised in that** at least one pressure sensor (14) is provided, which is configured to measure the static pressure in a fluid chamber (10, 11) of the fluid shut-off device (3).

6. The fluid shut-off device (3) according to one of claims 1 to 5, **characterised in that** a storage element (15) for storing test fluid is arranged on the first connecting element (7) and/or on the second connecting element (8).

7. The fluid shut-off device (3) according to one of claims 1 to 6, **characterised in that** the first connecting element (7) and/or the second connecting element (8) comprises at least one openable and closable valve element (16).

8. The fluid shut-off device (3) according to claim 7, **characterised in that** a drip sensor (17) and/or a flow meter (28) is arranged on at least one fluid conduit (12).

9. The fluid shut-off device (3) according to one of claims 1 to 8, **characterised in that** the first testing electrode (4) and/or the second testing electrode (5) is cylinder-shaped, and/or **in that** the first testing electrode (4) and/or the second testing electrode (5) is arranged in a recess of the corresponding connecting element (7, 8).

10. The fluid shut-off device (3) according to one of claims 1 to 9, **characterised in that** a suction device (27) is provided for generating a negative pressure in the testing device and the fluid shut-off device (3), or **in that** a pivot device is provided for changing the position of the testing device.

11. The fluid shut-off device (3) according to one of claims 2 to 10, **characterised in that** the fluid chambers (10, 11) of the fluid shut-off device (3) are substantially completely filled or fillable with a test fluid, and **in that** the static pressure of the test fluid is preferably selected in accordance with EN 12266 P12.

12. The fluid shut-off device (3) according to one of claims 1 to 11, **characterised in that** the shut-off element (1) of the fluid shut-off device (3) is loaded or loadable with a static pressure.

13. A **method** for leak testing a fluid shut-off device (3) according to one of the preceding claims, comprising the steps of:
- filling the fluid shut-off device (3) with a test fluid, preferably electrically conductive water,
- closing the shut-off element (1),
- applying a test pressure to the test fluid,
- measuring the electrical resistance or the current flow between a first testing electrode (4) and a second testing electrode (5), wherein the testing electrodes (4, 5) are arranged on different sides of the shut-off element (1).

14. The method according to claim 13, **characterised in that** the test fluid is water, the water preferably having a constant conductivity.

## Revendications

1. **Dispositif d'arrêt de fluide (3),** comprenant un dispositif de test pour le test d'étanchéité, qui comprend un élément d'arrêt (1) électriquement isolant, mobile et sollicitable par une pression, ainsi que un dispositif de raccordement (2) disposé sur chacun des deux côtés de l'élément d'arrêt,
- dans lequel le dispositif de test comprend une première électrode de test (4), une deuxième électrode de test (5), ainsi qu'un dispositif de mesure (6) en liaison électriquement conductrice avec la première électrode de test (4) et avec la deuxième électrode de test (5),
- dans lequel le dispositif de mesure (6) est conçu pour mesurer la résistance électrique ou le flux de courant entre la première électrode de test (4) et la deuxième électrode de test (5),
- dans lequel un premier élément de raccordement (7) et un deuxième élément de raccordement (8) sont prévus, le premier élément de raccordement (7) et le deuxième élément de raccordement (8) étant conçus pour être reliés au dispositif d'arrêt de fluide (3), en particulier aux dispositifs de raccordement (2) du dispositif d'arrêt de fluide (3),
- la première électrode de test (4) étant disposée sur le premier élément de raccordement (7),
- la deuxième électrode de test (5) étant disposée sur le deuxième élément de raccordement (8), et
- le premier élément de raccordement (7) et/ou le deuxième élément de raccordement (8) présentant une ouverture de fluide (9),
**caractérisé en ce que** le premier élément de raccordement (7) et/ou le deuxième élément de raccordement (8) comprend en outre un ensemble d'électrodes auxiliaires (18), l'ensemble d'électrodes auxiliaires (18) comprenant une première électrode auxiliaire (19), une deuxième électrode auxiliaire (20), et un chambre de fluide de test (21), une résistance électrique étant mesurable entre la première électrode auxiliaire (19) et la deuxième électrode auxiliaire (20), et la première électrode auxiliaire (19) et la deuxième électrode auxiliaire (20) n'étant pas séparées l'une de l'autre par un élément d'arrêt (1).

2. Dispositif d'arrêt de fluide (3) selon la revendication 1, **caractérisé en ce que** le premier élément de raccordement (7) est disposable de manière étanche aux fluides sur un premier dispositif de raccordement (2') du dispositif d'arrêt de fluide (3) pour former une première chambre de fluide (10), et **en ce que** le deuxième élément de raccordement (8) est disposable de manière étanche aux fluides sur un deuxième dispositif de raccordement (2") du dispositif d'arrêt de fluide (3) pour former une deuxième chambre de fluide (11).

3. Dispositif d'arrêt de fluide (3) selon la revendication 1 ou 2, **caractérisé en ce qu'**une conduite de fluide (12) est disposée sur au moins une ouverture de fluide (9), de préférence sur les deux ouvertures de fluide (9), pour l'amenée ou l'évacuation d'un liquide de test.

4. Dispositif d'arrêt de fluide (3) selon la revendication 3, **caractérisé en ce qu'**au moins une conduite de fluide (12) présente un élément d'isolation (13) électriquement isolant, de préférence un accouplement électriquement isolant.

5. Dispositif d'arrêt de fluide (3) selon l'une des revendications 1 à 4, **caractérisé en ce que** au moins un capteur de pression (14) est prévu, qui est conçu pour mesurer la pression statique dans une chambre de fluide (10, 11) du dispositif d'arrêt de fluide (3).

6. Dispositif d'arrêt de fluide (3) selon l'une des revendications 1 à 5, **caractérisé en ce qu'**un élément de stockage (15) est disposé sur le premier élément de raccordement (7) et/ou sur le deuxième élément de raccordement (8) pour stocker le fluide de test.

7. Dispositif d'arrêt de fluide (3) selon l'une des revendications 1 à 6, **caractérisé en ce que** le premier élément de raccordement (7) et/ou le deuxième élément de raccordement (8) comprend au moins un élément de valve (16) ouvrable et fermable.

8. Dispositif d'arrêt de fluide (3) selon la revendication 7, **caractérisé en ce qu'**un capteur de gouttes (17) et/ou un débitmètre (28) est disposé sur au moins une conduite de fluide (12).

9. Dispositif d'arrêt de fluide (3) selon l'une des revendications 1 à 8, **caractérisé en ce que** la première électrode de test (4) et/ou la deuxième électrode de test (5) est de forme cylindrique, et/ou **en ce que** la première électrode de test (4) et/ou la deuxième électrode de test (5) est disposée dans un évidement de l'élément de raccordement (7, 8) correspondant.

10. Dispositif d'arrêt de fluide (3) selon l'une des revendications 1 à 9, **caractérisé en ce qu'**un dispositif d'aspiration (27) est prévu pour générer une sous-pression dans le dispositif de test et le dispositif d'arrêt de fluide (3), ou **en ce qu'**un dispositif de pivotement est prévu pour modifier la position du dispositif de test.

11. Dispositif d'arrêt de fluide (3) selon l'une des revendications 2 à 10, **caractérisé en ce que** les chambres de fluide (10, 11) du dispositif d'arrêt de fluide (3) sont remplies ou remplissables sensiblement entièrement avec un fluide de test, et **en ce que** la pression statique du fluide de test est choisie de préférence selon EN 12266 P12.

12. Dispositif d'arrêt de fluide (3) selon l'une des revendications 1 à 11, **caractérisé en ce que** l'élément d'arrêt (1) du dispositif d'arrêt de fluide (3) est chargé ou chargeable avec une pression statique.

13. **Procédé** de test d'étanchéité d'un dispositif d'arrêt de fluide (3) selon l'une des revendications précédentes, comprenant les étapes suivantes :
- remplir le dispositif d'arrêt de fluide (3) avec un fluide de test, de préférence de l'eau conductrice d'électricité,
- fermer l'élément d'arrêt (1),
- établir une pression de test sur le fluide de test,
- mesurer la résistance électrique ou le flux de courant entre une première électrode de test (4) et une deuxième électrode de test (5), les électrodes de test (4, 5) étant disposées sur différents côtés de l'élément d'arrêt (1).

14. Procédé selon la revendication 13, **caractérisé en ce que** le fluide de test est de l'eau, l'eau présentant de préférence une conductivité constante.
